# EUROPÄISCHE PATENTANMELDUNG

(11) **EP 3 819 843 A1**
(43) Veröffentlichungstag der Anmeldung: **12.05.2021**
(21) Anmeldenummer: 20201204.3
(22) Anmeldetag: 12.10.2020
(51) Int. Cl.: G06Q 10/08

(54) **HAUSHALTSLAGERVORRICHTUNG**

(30) Priorität: 06.11.2019 DE 102019129849
(71) Anmelder: Miele & Cie. KG, 33332 Gütersloh (DE)
(72) Erfinder: Hachmeister, Tim, 32427 Minden (DE); Randazzo, Danilo, 33613 Bielefeld (DE); Lörcks, Sebastian, 33335 Gütersloh (DE); Wei, Qian, 33330 Gütersloh (DE); Neumann, Richard, 32805 Hornbad-Meinberg (DE); Jung, Eugen, 33334 Gütersloh (DE)

(57) **Zusammenfassung**

Die Erfindung betrifft eine Haushaltslagervorrichtung (1) mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und mit wenigstens einer Bilderfassungseinheit (21), welche ausgebildet und angeordnet ist, wenigstens ein Objekt (3) zumindest abschnittsweise optisch zu erfassen, wenn das Objekt (3) dem Lagerungselement (13, 14, 15) hinzugefügt oder dem Lagerungselement (13, 14, 15) entnommen wird, wobei die Haushaltslagervorrichtung (1) ausgebildet ist, das Objekt (3) wenigstens basierend auf den optisch erfassten Bilddaten der Bilderfassungseinheit (21) zu bestimmen. Die Haushaltslagervorrichtung (1) ist gekennzeichnet durch wenigstens eine Scannereinheit (22), welche ausgebildet und angeordnet ist, eine Kodierung des Objekts (3) zu erfassen, wobei die Haushaltslagervorrichtung (1) ferner ausgebildet ist, das Objekt (3) wenigstens basierend auf der erfassten Kodierung zu bestimmen.

## Beschreibung

Die Erfindung betrifft eine Haushaltslagervorrichtung nach dem Oberbegriff des Patentanspruchs 1 sowie ein Objekterkennungssystem für eine derartige Haushaltslagervorrichtung gemäß dem Patentanspruch 15.

Seitdem der Mensch Lebensmittel herstellt, welche über seinen aktuellen Bedarf hinausgehen, stellt sich die Frage der Lagerung der Lebensmittel, um diese auch später noch konsumieren zu können. Insbesondere müssen die Lebensmittel haltbar gemacht und in diesem Zustand gelagert werden können. Dies gilt auch für andere Bedarfsgegenstände, welche z.B. trocken, lichtgeschützt und dergleichen zu lagern sein können.

Heutzutage werden Lebensmittel, Haushaltsmittel und dergleichen in privaten Haushalten sowie z.B. in der Gastronomie und in Hotels z.B. in Lagerregalen, in Vorratsregalen und in Küchenschränken sowie in Schubladen und Fächern von Küchenzeilen gelagert. Hier können Lebensmittel gelagert werden, welche entsprechend verpackt und haltbar sind. Lebensmittel wie z.B. Reis, Nudeln und dergleichen können getrocknet und z.B. in Kunststoff oder in Pappe verpackt sein. Andere Lebensmittel können in Gläsern oder als Konservendosen luftdicht verschlossen und in Glas bzw. in Metall verpackt sein. Derartig verpackte Lebensmittel können möglichst kühl aber dennoch bei Raumtemperatur z.B. in einem Vorratsraum bzw. in einer Speisekammer in offenen Lagerregalen oder in mit Türen verschließbaren Vorratsschränken oder Küchenschränken sowie in der Küche in Schubladen und Fächern der Küchenzeile ggf. eng gepackt und ggfs. gestapelt gelagert werden. Dies gilt vergleichbar für Bedarfsgegenstände eines Haushalts wie z.B. Backpapier, Frischhaltefolie, Staubsaugerbeutel, Haushalts- sowie Toilettenpapier und dergleichen, welche üblicherweise in Pappe oder in Kunststofffolie verpackt ebenfalls z.B. an den zuvor beschriebenen Stellen im Vorratsraum bzw. in der Speisekammer, in der Küche aber auch in einem Haushaltsraum zumindest trocken gelagert werden können. Auch können Weinflaschen in einem Weinregal oder in einem Weinklimaschrank bzw. Weintemperierschrank gelagert werden.

Für einige Lebensmittel kann es erforderlich sein, diese gekühlt oder sogar gefroren zu lagern. Hierzu können Kühlgeräte bzw. Gefriergeräte wie z.B. Kühlschränke und Kühltruhen bzw. Gefrierschränke und Gefriertruhen verwendet werden. Diese können in ihrem schließbaren Innenraum, welcher auch als Nutzraum bezeichnet werden kann, die zu kühlenden bzw. zu gefrierenden Lebensmittel aufnehmen und die hierfür erforderliche Temperatur im Innenraum erzeugen. Dies kann für leicht verderbliche Lebensmittel wie z.B. Fleisch- und Wurstwaren, Molkereiprodukte, Fruchtsäfte sowie frisches Obst und Gemüse gelten, welche insbesondere zum zeitnahen Verzehr üblicherweise gekühlt im Haushalt gelagert werden. Kühlschränke sind dabei allgemein in jeder Küche anzutreffen, während Kühltruhen sowie Gefriergeräte nicht unbedingt in jedem Haushalt zu finden sind und dann eher im Vorratsraum, in der Speisekammer, im Keller, in der Garage etc. aufgestellt werden.

Da der Vorrat an Lebensmitteln und bzw. oder Haushaltsmitteln stets im Laufe der Zeit verbraucht wird, ist dieser regelmäßig vom Benutzer wieder aufzufüllen. Der Benutzer sollte daher einen Überblick über die gelagerten Lebensmittel und bzw. oder Haushaltsmittel haben, um deren Vorrat durch Einkaufen rechtzeitig wieder gezielt auffüllen zu können. Hierzu kann der Vorrat vom Benutzer optisch erfasst werden. Die einzukaufenden Waren können dann notiert werden, z.B. klassisch handschriftlich auf einen Einkaufszettel oder auch elektronisch z.B. in einem Smartphone, damit sich der Benutzer diese Informationen nicht merken muss sowie diese Informationen vergessen kann.

Um einem Benutzer z.B. eines Kühlschranks automatisch eine Übersicht über die dort gelagerten Lebensmittel zur Verfügung stellen zu können, ist bekannt, automatisch zu erkennen, welches Lebensmittel vom Benutzer als Person aus dem Innenraum des Kühlschranks als Betriebsvolumen entnommen und in den Innenraum des Kühlschranks eingebracht wird. Diese Information kann dem Benutzer als Inventar des Kühlschranks zur Verfügung gestellt werden, um z.B. den nächsten Einkauf zielgerichtet planen zu können, ohne sich selbst einen Überblick über den aktuellen Inhalt des Kühlschranks verschaffen zu müssen. Auch kann diese Information einem Benutzer während des Einkaufs zur Verfügung gestellt sowie auch fortlaufend aktualisiert werden.

Nachteilig ist hierbei jedoch, dass lediglich Veränderungen des Inventars des Kühlschranks erfasst werden können. Dieses System kann somit nur dann sinnvoll angewendet werden, wenn mit einem leeren Kühlschrank begonnen und dann jede Entnahme sowie Eingabe von Lebensmitteln erkannt wird. Insbesondere können unerkannte bzw. fehlerhaft erkannte Entnahmen sowie Eingaben von Lebensmitteln zu einer fehlerhaften Information über das Inventar des Kühlschranks führen und den Benutzer beim Einkaufen eher fehlleiten als unterstützen. Dieser Nachteil kann sich mit der Zeit bzw. mit der zunehmenden Anzahl von fehlerhaften Informationen verstärken.

Die DE 10 2016 223 754 A1 beschreibt ein Haushaltssystem mit wenigstens einem Haushaltsmöbel und bzw. oder Haushaltsgerät, insbesondere einem Haushaltskältegerät, mit wenigstens einer Identifizierungseinheit, welche zumindest einem innerhalb des Haushaltsmöbels und bzw. oder Haushaltsgeräts angeordneten und bzw. oder anordenbaren Konsumgut zugeordnet und dazu vorgesehen ist, eine individuelle Identifizierungsinformation bereitzustellen, und mit einer Erfassungseinheit, welche dazu vorgesehen ist, die Identifizierungsinformation zu erfassen. Ein Benutzer kann eine individuelle Identifizierungseinheit an einem Lebensmittel anordnen, z.B. wenn er das Lebensmittel gekauft hat und zum ersten Mal in den Kühlschrank stellt. Diese Identifizierungseinheit kann dann diesem Typ von Lebensmittel z.B. mittels eines Smartphones vom Benutzer zugeordnet werden. Mittels einer optischen Erfassung der Identifizierungseinheiten soll das entsprechende Lebensmittel sicherer erkannt und identifiziert werden können als ohne die Identifizierungseinheit. Dies soll die Genauigkeit der automatisierten Inventarerfassung eines Kühlschranks verbessern.

Nachteilig ist hierbei jedoch, dass der Benutzer die Lebensmittel von Hand mit jeweils einer Identifizierungseinheit versehen muss. Die Identifizierungseinheit muss jeweils auch vom Benutzer wieder von Hand entfernt werden, wenn das Lebensmittel verbraucht bzw. dessen Verpackung weggeschmissen wird. Gerade nicht verwendete Identifizierungseinheiten müssen vom Benutzer gelagert werden, was zusätzlichen Platz erfordern kann. In jedem Fall stellt die Nutzung des Haushaltssystems der DE 10 2016 223 754 A1 einen nicht unerheblichen Zeitaufwand dar, welcher den Benutzer von der Verwendung des Haushaltssystems der DE 10 2016 223 754 A1 abhalten kann. Dies kann insbesondere bei einem wöchentlichen Großeinkauf für eine mehrköpfige Familie der Fall sein.

Zu beachten ist hierbei, dass der Benutzer das Haushaltssystem der DE 10 2016 223 754 A1 auch durchgängig anwenden muss, um den entsprechenden Nutzen zu erhalten. Wird beispielsweise ein gesamter Einkauf, insbesondere ein wöchentlicher Großeinkauf für eine mehrköpfige Familie, ohne die Verwendung der Identifizierungseinheiten in den Kühlschrank eingeräumt, so kann dies zu einer Ungenauigkeit der automatisch erstellten Inventarliste des Kühlschrankeinhalts führen, welche das Haushaltssystem der DE 10 2016 223 754 A1 für den Benutzer unbrauchbar machen kann.

Auch muss der Benutzer darauf achten, dass er jedem Lebensmitteltyp den entsprechenden Typ von Identifizierungseinheit richtig zuordnet. Werden Identifizierungseinheiten den falschen Lebensmitteltypen zugeordnet, so kann auch dies zu Ungenauigkeiten der automatisch erstellten Inventarliste des Kühlschrankeinhalts führen. Dies kann für einen Benutzer jedoch eine derartige zusätzliche Anstrengung, gerade bei einem wöchentlichen Großeinkauf für eine mehrköpfige Familie, bedeuten, dass das Haushaltssystem der DE 10 2016 223 754 A1 nicht verwendet wird.

Sowohl die vorstehend genannte Übersicht als auch das Haushaltssystem der DE 10 2016 223 754 A1 basieren dabei auf einer optischen Erfassung der Lebensmittel, welche sich z.B. im Innenraum eines Kühlschranks befinden bzw. aus dem Innenraum des Kühlschranks entnommen und in den Innenraum des Kühlschranks eingebracht werden. Somit ist jeweils wenigstens eine Bilderfassungseinheit in Form einer Kamera ein wesentliches Element bei der Erfassung des Inhalts eines Kühlschranks, welche in Kombination mit einer nachgeschalteten Bildverarbeitungseinheit betrieben wird. Üblicherweise werden derartige Bildverarbeitungseinheiten mittels Mikroprozessor und bzw. oder einem FPGA (Field Programmable Gate Array) realisiert.

Die Erfassung der Lebensmittel als Objekte kann dabei statisch wie bei dem Haushaltssystem der DE 10 2016 223 754 A1 erfolgen, bei dem ein Bild oder mehrere Bilder vom Innenraum des Kühlschranks z.B. dann aufgenommen werden, wenn der Benutzer die Tür des Kühlschranks schließt und bzw. oder öffnet. U.a. folgende Randbedingungen können die Qualität der Bilderfassung der Lebensmittel und infolge dessen auch die Qualität der Erkennung der Lebensmittel sowie die Erstellung der Bestandsliste bzw. Inventarliste des Kühlschrankeinhalts beeinträchtigen:
- Verdeckung des Objekts, z.B. durch die Hand des Benutzers,
- Bewegungsunschärfe, z.B. resultierend aus den Einflüssen der Geschwindigkeit der Bewegung des Objekts beim Be- bzw. Entladen, aus den Lichtverhältnissen und bzw. oder aus der Verschlusszeit einer Kamera als Bilderfassungseinheit.

Diese Randbedingungen können in vielen Fällen nicht sinnvoll geändert werden, da sie sich insbesondere aus dem Nutzerverhalten wie z.B. aus der Einlagerungs- bzw. Entnahmegeschwindigkeit der Objekte, der Menge der gleichzeitig bei einem Einlagerungsvorgang in den Kühlschrank platzierten Objekte sowie durch Umverpackungen wie z.B. Aufbewahrungsboxen etc. oder als eine Folge des Aufstellortes des Lebensmittels innerhalb des Innenraums des Kühlschranks ergeben. Das natürliche Verhalten des Benutzers, so z.B. der Bewegungsablauf und die Geschwindigkeit beim Beladen, die Positionierung der Objekte im Kühlschrank usw. wird durch die Erfassung der Objekte in der Bewegung nämlich nicht verändert.

Auch kann die Qualität der Bilderfassung durch die Bilderfassungseinheit an Rahmen- und Umweltbedingungen geknüpft sein, welche den Rahmen- und Umweltbedingungen eines Kühlschranks sowie dem Nutzerverhalten widersprechen können. So erfordert ein scharfes Bild eines bewegten Objekts u.a. eine gewisse vorhandene Lichtmenge, welche im Innenraum eines Kühlschranks nicht an jeder Stelle und insbesondere nicht bei Verdeckung eines relevanten Objekts durch andere Objekte und bzw. oder durch die Hand des Benutzers gewährleistet werden kann. Somit kann die Erfassung eines Bildes mit unzureichender Bildqualität daraus resultieren, dass das aufgenommene Bild mangels ausreichender Beleuchtung sowie gleichzeitiger Bewegung des Objekts nicht scharf genug ist, um erfolgreich verarbeitet zu werden. Aufgrund ungeeigneter Beleuchtung kann das erfasste Bild auch einen Farbstich haben, d.h. der Weißabgleich kann nicht korrekt sein, was ebenfalls die Bildverarbeitung negativ beeinflussen kann. Demzufolge können bei der Verwendung einer optischen Bilderfassungseinheit wie z.B. einer Kamera in vielen Fällen die für die Bildverarbeitung relevanten Merkmale eines Objekts wie z.B. dessen Farbe, Form, dominante Logos, Schriftzüge usw. für eine zuverlässige Objekterkennung nicht bestimmt werden, da die Bildqualität nicht ausreichten ist.

Auch kann aufgrund der Bewegung des Objekts durch den Benutzer und die Stelle im Innenraum des Kühlschranks, an dem das Objekt zu platzieren bzw. von wo das Objekt zu entnehmen ist, nicht sichergestellt werden, dass das Objekt von der Bilderfassungseinheit in dessen Bereich der Tiefenschärfe bzw. Schärfentiefe bildlich erfasst werden kann.

Ferner kann die Verwendung einer vergleichsweise kostengünstigen Bilderfassungseinheit und bzw. oder Bildverarbeitungseinheit zu einer vergleichsweise schlechten Qualität des erfassten Bildes bzw. dessen Verarbeitungsergebnisses führen, auch wenn dies die Kosten derartige Systeme reduzieren kann. Spart der Benutzer somit am Preis für die Unterstützung der automatisierten Erstellung einer Inventarliste des Kühlschrankinhalts, kann hieraus ein entsprechend unzureichendes Ergebnis resultieren. Da für einen Benutzer eines Objekterkennungssystems für Lebensmittel die Erkennungsrate der Lebensmittel das entscheidende Kriterium für die Akzeptanz des Systems sein kann, können zur Reduzierung der Kosten vorgenommene Qualitätseinbußen der Bilderfassung und bzw. oder der Bildverarbeitung der Anwendung des Systems bzw. dessen Anschaffung entgegenstehen.

Der Erfindung stellt sich somit das Problem, eine Haushaltslagervorrichtung der eingangs beschriebenen Art bereitzustellen, so dass Objekte zuverlässiger, einfacher, kostengünstiger, schneller, variantenreicher und bzw. oder mit geringerem Aufwand erkannt werden können. Zumindest soll eine Alternative zu bekannten derartigen Haushaltslagervorrichtungen geschaffen werden.

Erfindungsgemäß wird dieses Problem durch eine Haushaltslagervorrichtung mit den Merkmalen des Patentanspruchs 1 sowie durch ein Objekterkennungssystem mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die Erfindung eine Haushaltslagervorrichtung mit einem Nutzraum mit wenigstens einem Lagerungselement, vorzugsweise mit einer Mehrzahl von Lagerungselementen, welches zur Aufnahme und zur Lagerung wenigstens eines Objekts, vorzugsweise wenigstens eines Lebensmittels und bzw. oder wenigstens eines Haushaltsmittels, ausgebildet ist. Eine derartige Haushaltslagervorrichtung kann sowohl offen als auch schließbar, z.B. mittels wenigstens einer schwenkbaren oder schiebbaren Tür, einer Klappe oder einem Deckel, ausgebildet sein. Die Haushaltslagervorrichtung kann ein Regal, ein Schrank, eine Küchenzeile und dergleichen sein, wie eingangs beschrieben.

Die Haushaltslagervorrichtung weist ferner wenigstens eine Bilderfassungseinheit auf, welche ausgebildet und angeordnet ist, wenigstens ein Objekt zumindest abschnittsweise optisch zu erfassen, wenn das Objekt dem Lagerungselement hinzugefügt oder dem Lagerungselement entnommen wird, wobei die Haushaltslagervorrichtung ausgebildet ist, das Objekt wenigstens basierend auf den optisch erfassten Bilddaten der Bilderfassungseinheit zu bestimmen. Hierdurch kann eine dynamische Bilderfassung erfolgen, so dass das Objekt in einer Bewegung zur Haushaltslagervorrichtung hin bzw. in diese hinein sowie in der umgekehrten Richtung optisch erfasst und bestimmt werden kann. Durch die Bestimmung der Bewegungsrichtung des Objekts kann auch unterschieden werden, ob das Objekt dem Lagerungselement hinzugefügt oder dem Lagerungselement entnommen wird.

Da ein derartiges bekanntes Objektstatusverfolgungssystem jedoch die Objekte nicht ausreichend sicher erkennen kann, weist die erfindungsgemäße Haushaltsvorratsvorrichtung wenigstens eine Scannereinheit auf, welche ausgebildet und angeordnet ist, eine Kodierung des Objekts zu erfassen, wobei die Haushaltslagervorrichtung ferner ausgebildet ist, das Objekt wenigstens basierend auf der erfassten Kodierung zu bestimmen. Unter einer Kodierung wird eine eindeutige Kennzeichnung verstanden, welche durch Zuordnung der erfassten Kodierung zu einem vorbestimmten Vorrat von Referenzinformationen eine eindeutige Identifikation des Objekts erlauben kann. Eine derartige Kodierung kann z.B. eine optisch erfassbare Kodierung wie z.B. ein Barcode oder ein QR-Code aber auch eine z.B. elektronische Kodierung z.B. in Form eines RFID-Chips sein, wie weiter unten näher beschrieben werden wird.

Somit kann erfindungsgemäß die Bestimmung eines Objekts, welches der Haushaltslagervorrichtung hinzugefügt und bzw. oder aus der Haushaltslagervorrichtung entnommen wird, nunmehr nicht nur basierend auf den optisch erfassten Bilddaten der Bilderfassungseinheit erfolgen. Denn falls von der Haushaltslagervorrichtung und bzw. oder von einem Benutzer erkannt wird, dass die Erkennung des Objekts basierend auf den optisch erfassten Bilddaten der Bilderfassungseinheit nicht erfolgreich bzw. nicht eindeutig ist, so kann anschließend das Objekt z.B. von Benutzer vor die Scannereinheit gehalten und dessen Kodierung erfasst werden. Da die Informationen, welche der Kodierung von der Haushaltslagervorrichtung entnommen werden können, eindeutig sein können, kann auf diese Art und Weise das Objekt mit absoluter Sicherheit bestimmt werden, sofern die Kodierung bzw. die Referenzinformationen entsprechend gewählt sind. Dies kann eine Erkennungsrate der Objekte von 100% gewährleisten. Auch kann eine derartige Kodierung zusätzliche Informationen über die Objekte umfassen, welche mit ausgelesen und genutzt werden können.

Da die Erfassung der Kodierung es jedoch erfordert, dass der Benutzer als zusätzlichen Schritt der Entnahme bzw. der Einlagerung des Objekts dieses von der Scannereinheit erfassen lässt, ist es zu bevorzugen, eine optische Bilderfassung mit einer Scannereinheit zum Scannen der Kodierung der Objekte zu verbinden und das Scannen der Kodierung lediglich dann anzuwenden, wenn dies erforderlich ist, um das Objekt zuverlässiger zu erkennen, als dies alleinig basierend auf den optisch erfassten Bilddaten der Bilderfassungseinheit möglich ist. Daher kann das Scannen der Kodierung des Objekts insbesondere lediglich dann erfolgen, wenn die Erkennung des Objekts basierend auf den optisch erfassten Bilddaten der Bilderfassungseinheit nicht erfolgreich bzw. nicht eindeutig erfolgt ist, so dass der zusätzliche Aufwand für den Benutzer lediglich dann anfällt, wenn dies erforderlich ist.

Beispielsweise kann aus den optisch erfassten Bilddaten der Bilderfassungseinheit ein Objekt nicht eindeutig als "Milch im Tetrapack" erkannt werden, da die Form eine große Ähnlichkeit mit der Form von "Saft im Tetrapack" haben kann. Analoges gilt für andere von der äußeren Form und oder Erscheinung her ähnlichen Gegenstände. Wird ein derartiges Objekt basierend auf den optisch erfassten Bilddaten der Bilderfassungseinheit somit nicht sicher erkannt, kann dies von der Haushaltslagervorrichtung und bzw. oder vom Benutzer erkannt werden, wie weiter unten noch näher beschrieben werden wird. Nun kann die Scannereinheit von der Haushaltslagervorrichtung und bzw. oder vom Benutzer aktiviert werden, wie weiter unten noch näher beschrieben werden wird. Wird jetzt eine Kodierung des Objekts wie in diesem Beispiel das Etikett mit Barcode vom Benutzer vor die Scannereinheit gehalten und der Barcode erfasst und ausgelesen, so kann z.B. eine "Milchpackung" sicher als solche erkannt werden. Dieser zusätzliche technische Aufwand seitens der Haushaltslagervorrichtung sowie der zusätzliche Schritt des Scannens für den Benutzer kann gerechtfertigt sein, da auf diese Art und Weise eine absolut sichere Erkennung des Objekts erreicht werden kann.

Voraussetzung ist das Vorhandensein einer erkennbaren Kodierung, was bei Verpackungen üblicherweise der Fall ist, aber auch bei etikettiertem Obst und Gemüse oder dergleichen der Fall sein kann. Denkbar ist aber auch das Erkennen von charakteristischen Mustern, die üblicherweise bei bestimmten Produkten auftreten, etwa Markenzeichen, Firmennamen, grafische Gestaltungselemente oder dergleichen, die "scannbar" sind.

Die Informationen der von der Haushaltslagervorrichtung gelagerten bzw. aus der Haushaltslagervorrichtung entnommenen Objekte kann somit mit einer absoluten Verlässlichkeit zur Verfügung gestellt werden, wie es bisher bekannte Lösungen nicht bieten können. Dies kann jeglicher Verwendung dieser Information zugutekommen. Insbesondere kann eine Bestands- bzw. Inventarliste der Haushaltslagervorrichtung eine sichere Genauigkeit und Zuverlässigkeit aufweisen, was den Nutzen für den Benutzer z.B. bei der Unterstützung beim Einkaufen sowie bei der Planung der Essenszubereitung erhöhen und auch die Akzeptanz des Benutzers dieser Informationen verbessern kann.

Vorzugsweise ist der Nutzraum mittels wenigstens eines Schließelements, vorzugsweise mittels wenigstens einer Tür, schließbar ausgebildet, wobei die Scannereinheit an dem Schließelement dem Nutzraum zugewandt angeordnet ist. Hierdurch kann die Scannereinheit an einer Stelle der Haushaltslagervorrichtung angeordnet werden, welche vom Benutzer einfach und schnell erreicht werden kann. Dies kann dem Benutzer das Scannen erleichtern und den Aufwand des Benutzers zur Durchführung dieses Schritts gering halten.

Gemäß einem Aspekt der Erfindung ist die Scannereinheit ausgebildet, eine Barcode-Kodierung des Objekts, eine QR-Kodierung des Objekts und bzw. oder eine RFID-Kodierung des Objekts zu erfassen.

Unter einer Barcode-Kodierung bzw. einem Barcode wird eine Kodierung verstanden, welche verschieden breite, parallele Strichen und Lücken aufweist bzw. hieraus besteht, welche als binäre Symbole die jeweiligen Informationen abbilden können. Ein Barcode kann auch als Strichcode, Balkencode oder Streifencode bezeichnet werden. Ein Barcode kann als optoelektronisch lesbare Schrift mit einem entsprechenden optischen Lesegerät wie z.B. mit einem Barcodelesegerät bzw. einem Barcode-Scanner aber auch mittels einer Kamera maschinell eingelesen und anschließend elektronisch weiterverarbeitet werden, um die abgebildeten Informationen dekodieren und hierdurch lesbar machen zu können.

Eine QR-Kodierung stellt eine ähnliche Form der Kodierung wie ein Barcode dar, bei welcher die kodierten Daten binär als eine quadratische Matrix aus schwarzen und weißen Quadraten dargestellt werden. Auch eine QR-Kodierung bzw. ein QR-Code kann mit einem entsprechenden optischen Lesegerät oder mit einer Kamera maschinell eingelesen und anschließend elektronisch weiterverarbeitet werden, um die abgebildeten Informationen dekodieren und hierdurch lesbar machen zu können.

Eine RFID-Kodierung, welche z.B. mittels eines RFID-Transponders als RFID-Chips umgesetzt werden kann, stellt eine weitere Möglichkeit zur Kodierung von Informationen eines Objekts dar. In diesem Fall werden die Informationen der RFID-Kodierung von dem entsprechenden RFID-Transponder elektronisch gespeichert, so dass diese Informationen mittels einer Scannereinheit in Form eines RFID-Lesegeräts mittels magnetischer Wechselfelder in geringer Reichweite oder mittels hochfrequenter Radiowellen ausgelesen werden können.

In jedem Fall kann hierdurch eine einfache, schnelle und bzw. oder zuverlässige Art der Speicherung von Informationen mittels der jeweiligen Kodierung sowie deren Auslesung mittels der Scannereinheit ermöglicht werden, was den Aufwand der Umsetzung reduzieren bzw. gering und kostengünstig halten sowie zu einer ausreichend hohen Akzeptanz des Benutzers führen kann, um das Objekt auch von der Scannereinheit erfassen zu lassen.

Gemäß einem weiteren Aspekt der Erfindung ist die Haushaltslagervorrichtung ausgebildet, einen Hinweis an einen Benutzer, vorzugsweise optisch und bzw. oder akustisch, auszugeben, falls das Objekt basierend auf den optisch erfassten Bilddaten der Bilderfassungseinheit bestimmt und bzw. oder nicht bestimmt werden konnte. Es soll der Benutzer dabei unterstützt werden, die Scannereinheit nur dann zu benutzen, wenn dies auch erforderlich ist, um unnötigen Aufwand für den Benutzer und bzw. oder Energie zum Betrieb der Scannereinheit zu sparen.

Hierzu kann der Benutzer durch wenigstens einen Hinweis lediglich darüber informiert werden, dass das Objekt basierend auf den optisch erfassten Bilddaten der Bilderfassungseinheit ausreichend bestimmt wurde, so dass der Einsatz der Scannereinheit für dieses Objekt nicht erforderlich ist. Bleibt dieser Hinweis aus, so stellt dies eine Aufforderung an den Benutzer dar, die Kodierung des Objekts von der Scannereinheit erfassen zu lassen. Umgekehrt kann auch lediglich dann ein Hinweis an den Benutzer erfolgen, falls das Objekt basierend auf den optisch erfassten Bilddaten der Bilderfassungseinheit nur unzureichend oder gar nicht bestimmt werden konnte, so dass der Einsatz der Scannereinheit für dieses Objekt erforderlich ist. Bleibt dieser Hinweis aus, so stellt dies eine Information an den Benutzer dar, dass auf das Erfassen der Kodierung des Objekts von der Scannereinheit verzichtet werden kann. Ferner können beide Möglichkeiten auch miteinander kombiniert angewendet werden, indem unterschiedliche Hinweise verwendet werden.

Ein derartiger Hinweis kann dabei optisch z.B. durch das Ausschalten und Einschalten einer Beleuchtung der Haushaltslagervorrichtung wie z.B. der Beleuchtung des Innenraums eines Kühlschranks erfolgen. Dies könnte auch mehrfach wiederholt werden, um ein Blinken zu erzeugen. Alternativ oder zusätzlich könnte eine Veränderung der Farbe einer derartigen Beleuchtung vorgenommen werden. Ein Blinken und bzw. oder eine Farbveränderung könnte auch solange beibehalten werden, bis das Objekts bzw. dessen Kodierung erfolgreich von der Scannereinheit erfasst wurde. Alternativ könnte ein Blinken und bzw. oder eine Farbveränderung nur kurzzeitig erfolgen, um den Benutzer nicht zu stören, jedoch auf die Notwendigkeit des Scannens der Kodierung des Objekts hinzuweisen. Alternativ können durch einen derartigen optischen Hinweis auch auf die erfolgreiche Bestimmung des Objekts basierend auf den optisch erfassten Bilddaten der Bilderfassungseinheit hingewiesen werden.

Alternativ oder zusätzlich kann ein akustischer Hinweis an den Benutzer erfolgen. Beispielsweise kann ein kurzzeitiger einzelner Ton ausgegeben werden. Auch kann ein einzelner Ton solange beibehalten werden, bis das Objekt von der Scannereinheit erfolgreich erfasst wurde. Ferner können Folgen mehrerer Töne kurzzeitig oder sich wiederholend ausgegeben werden. Ebenso kann eine Sprachausgabe erfolgen, welche den Benutzer z.B. auf die unzureichende Bestimmung des Objekts basierend auf den optisch erfassten Bilddaten der Bilderfassungseinheit hinweisen und bzw. oder dazu auffordern kann, die Kodierung des Objekts von der Scannereinheit erfassen zu lassen. Zusätzlich kann mittels der Sprachausgabe das bestimmte Objekt und ggfs. die Anzahl derartige Objekte in der Haushaltslagervorrichtung auch genannt werden.

In jedem Fall kann der Benutzer auf diese Art und Weise darüber informiert werden, ob eine erfolgreiche Bestimmung des Objekts basierend auf den optisch erfassten Bilddaten der Bilderfassungseinheit erfolgt ist oder nicht bzw. ob ein Scannen der Kodierung des Objekts erforderlich ist oder nicht. Dies kann unnötige Scanvorgänge vermeiden sowie zu einem Scannen der Objekte führen, bei welchen dies erforderlich ist.

Gemäß einem weiteren Aspekt der Erfindung ist die Haushaltslagervorrichtung ausgebildet, die Scannereinheit zu aktivieren, falls das Objekt basierend auf den optisch erfassten Bilddaten der Bilderfassungseinheit nicht bestimmt werden konnte. Es kann von der Haushaltslagervorrichtung bzw. dessen Bildverarbeitungseinheit selbstständig erkannt werden, dass eine Bestimmung des Objekts basierend auf den optisch erfassten Bilddaten der Bilderfassungseinheit nicht erfolgreich war. Diese Erkenntnis kann dann zum Aktivieren der Scannereinheit führen, damit das optisch nicht erkannte Objekt nun vom Benutzer vor die Scannereinheit gehalten und dessen Kodierung erfasst werden kann.

Gemäß einem weiteren Aspekt der Erfindung ist die Haushaltslagervorrichtung ausgebildet, die Scannereinheit zu aktivieren, falls das Objekt basierend auf den optisch erfassten Bilddaten der Bilderfassungseinheit an einer vorbestimmten Position relativ zur Haushaltslagervorrichtung erkannt wurde. Der Benutzer kann erkennen, dass eine Bestimmung des Objekts basierend auf den optisch erfassten Bilddaten der Bilderfassungseinheit gar nicht bzw. nicht ausreichend erfolgreich war. Hierauf kann der Benutzer ggfs. von der Haushaltslagervorrichtung durch einen Hinweis wie zuvor beschrieben hingewiesen worden sein. Nun kann der Benutzer die Scannereinheit aktivieren, indem er das Objekt an eine vorbestimmte Position relativ zur Haushaltslagervorrichtung und insbesondere im Nutzraum der Haushaltslagervorrichtung hält. Diese vorbestimmte Position ist der Haushaltslagervorrichtung bzw. dessen Bildverarbeitungseinheit bekannt. Wird an dieser vorbestimmten Position ein Objekt erkannt, insbesondere zeitlich unmittelbar nach einer erfolglosen Bestimmung des Objekts basierend auf den optisch erfassten Bilddaten der Bilderfassungseinheit, so kann dies als Anweisung des Benutzers an die Haushaltslagervorrichtung verstanden werden, die Scannereinheit zu aktivieren. Dies kann somit seitens des Benutzers einfach, schnell und bzw. oder intuitiv erfolgen, indem das Objekt, welches ohnehin von Benutzer in der Hand gehalten wird, an die vorbestimmte Position bewegt wird. Hierdurch kann eine Bedienung der Haushaltslagervorrichtung wie z.B. das Drücken einer Taste oder auch eine Spracheingabe, um die Scannereinheit zu aktivieren, vermieden werden.

Gemäß einem weiteren Aspekt der Erfindung weist die Haushaltslagervorrichtung wenigstens ein vorbestimmtes optisches Muster auf, welches vorzugsweise innerhalb des Nutzraums angeordnet ist, wobei die Haushaltslagervorrichtung ausgebildet ist, die Scannereinheit zu aktivieren, falls basierend auf den optisch erfassten Bilddaten der Bilderfassungseinheit eine zumindest abschnittsweise Verdeckung des vorbestimmten optischen Musters erkannt wurde. Auch hierdurch kann, vergleichsweise der zuvor beschriebenen Positionierung des Objekts, eine Aktivierung der Scannereinheit durch den Benutzer durch eine Bewegung des in der Hand gehaltenen Objekts erfolgen. In diesem Fall kann ein vorbestimmtes optisches Muster von dem Objekt verdeckt werden, so dass z.B. die Bildverarbeitungseinheit erkennen kann, dass im aktuell optisch erfassten Bild dieses vorbestimmte optische Muster fehlt.

Gemäß einem weiteren Aspekt der Erfindung ist die Haushaltslagervorrichtung ausgebildet, die Scannereinheit zu aktivieren, falls basierend auf den optisch erfassten Bilddaten der Bilderfassungseinheit eine vorbestimmte Bewegung des Objekts, vorzugsweise zur Bilderfassungseinheit hin, erkannt wurde. Auch hierdurch kann, vergleichsweise der zuvor beschriebenen Positionierungen des Objekts, eine Aktivierung der Scannereinheit durch den Benutzer durch eine Bewegung des in der Hand gehaltenen Objekts erfolgen. In diesem Fall kann der Benutzer mit dem in der Hand gehaltenen Objekt eine Bewegung ausführen, welche ausreichend charakteristisch sein kann, so dass diese von der Bildverarbeitungseinheit der Haushaltslagervorrichtung ausreichend sicher erkannt und von anderen Bewegungen des Benutzers unterschieden werden kann. Da die Bewegungen, welcher ein Benutzer ausführt, um Objekte aus einer Haushaltslagervorrichtung zu entnehmen sowie die Objekte in der entgegengesetzten Richtung dort zu platzieren, stets zumindest im Wesentlichen eine Vorzugsrichtung aufweisen, kann z.B. eine kreisförmige Bewegung hiervon gut zu unterscheiden sein, so dass eine derartige Bewegung zuverlässig zur Aktivierung der Scannereinheit verwendet werden kann. Auch kann eine Bewegung direkt auf die Bilderfassungseinheit zu eine derartige Bewegung darstellen, welche untypisch für das Ein- bzw. Ausräumen eines Objekts in bzw. aus einer Haushaltslagervorrichtung ist und daher ebenfalls zuverlässig zur Aktivierung der Scannereinheit verwendet werden kann.

Gemäß einem weiteren Aspekt der Erfindung ist die Haushaltslagervorrichtung ausgebildet, die Scannereinheit zu aktivieren, falls basierend auf den optisch erfassten Bilddaten der Bilderfassungseinheit lediglich ein Ausschnitt des Objekts erkannt wurde. Auch hierdurch kann, vergleichsweise der zuvor beschriebenen Positionierungen des Objekts, eine Aktivierung der Scannereinheit durch den Benutzer durch eine Bewegung des in der Hand gehaltenen Objekts erfolgen. In diesem Fall kann der Benutzer das Objekt so nah vor die Bilderfassungseinheit halten, dass dieses, ggfs. mittels einer anpassbaren Bildschärfe, zwar noch scharf erfasst werden kann, jedoch lediglich ausschnittsweise. Dies kann von einer Bildverarbeitungseinheit der Haushaltslagervorrichtung erkannt und als Anweisung des Benutzers verstanden werden, die Scannereinheit zu aktivieren.

Gemäß einem weiteren Aspekt der Erfindung ist die Haushaltslagervorrichtung ausgebildet, die Scannereinheit zu aktivieren, falls das Objekt basierend auf den optisch erfassten Bilddaten der Bilderfassungseinheit als unscharf erkannt wurde. Auch hierdurch kann, vergleichsweise der zuvor beschriebenen Positionierungen des Objekts, eine Aktivierung der Scannereinheit durch den Benutzer durch eine Bewegung des in der Hand gehaltenen Objekts erfolgen. In diesem Fall kann der Benutzer das Objekt so nah vor die Bilderfassungseinheit halten, dass dieses, ggfs. mangels einer anpassbaren Bildschärfe, nur noch unscharf erfasst werden kann. Dies kann von einer Bildverarbeitungseinheit der Haushaltslagervorrichtung erkannt und als Anweisung des Benutzers verstanden werden, die Scannereinheit zu aktivieren.

Gemäß einem weiteren Aspekt der Erfindung weist die Haushaltslagervorrichtung eine Näherungssensoreinheit auf, welche ausgebildet und angeordnet ist, eine Annäherung des Objekts an die Scannereinheit zu erfassen, wobei die Haushaltslagervorrichtung ausgebildet ist, die Scannereinheit zu aktivieren, falls eine Annäherung des Objekts an die Scannereinheit erkannt wurde. Die Näherungssensoreinheit kann vorzugsweise einen Abstandssensor aufweisen, welcher auch als Wegesensor, als Positionssensor oder als Distanzsensor bezeichnet werden kann und dazu ausgebildet und angeordnet ist, eine Annäherung eines von einem Benutzer in der Hand gehaltenen Objekts und bzw. oder einer Hand des Benutzers aufgrund des entsprechend geringen Abstands zu erkennen. Hierzu können jegliche geeigneten Messprinzipien verwendet werden, zu denen z.B. signalaussendende Messprinzipien gehören können, welche z.B. die Intensität, die Laufzeit und dergleichen eines Signals erfassen und auswerten können, welches von dem Objekt reflektiert werden kann. Auch hierdurch kann eine Aktivierung der Scannereinheit durch den Benutzer durch eine Bewegung des in der Hand gehaltenen Objekts erfolgen.

Gemäß einem weiteren Aspekt der Erfindung weist die Haushaltslagervorrichtung eine Lichtschrankeneinheit auf, welche ausgebildet und angeordnet ist, bei Annäherung des Objekts an die Scannereinheit unterbrochen zu werden, wobei die Haushaltslagervorrichtung ausgebildet ist, die Scannereinheit zu aktivieren, falls eine Unterbrechung der Lichtschranke der Lichtschrankeneinheit erkannt wurde. Der Verlauf der Lichtschranke kann dabei derart gewählt werden, dass der Benutzer das in der Hand gehaltene Objekt möglichst einfach, direkt und mit einer möglichst geringen Wegabweichung der eigentlichen Bewegung in die Lichtschranke halten und diese unterbrechen kann. Auch hierdurch kann eine Aktivierung der Scannereinheit durch den Benutzer durch eine Bewegung des in der Hand gehaltenen Objekts erfolgen.

Gemäß einem weiteren Aspekt der Erfindung ist die Haushaltslagervorrichtung ausgebildet, die Scannereinheit zu deaktivieren, falls die Kodierung des Objekts erfolgreich erkannt wurde und bzw. oder nach Ablauf einer vorbestimmten Zeitdauer. Auf diese Art und Weise kann die Scannereinheit selbsttätig wieder deaktiviert werden, wenn das Objekt erfolgreich gescannt wurde, da der zusätzliche Schritt des Scannens einer Kodierung eines Objekts möglichst nur dann und ausnahmsweise erfolgen soll, falls die Bestimmung des Objekts basierend auf den optisch erfassten Bilddaten der Bilderfassungseinheit nicht erfolgreich war. Da somit zu erwarten ist, dass nicht die Kodierung jedes Objekts gescannt werden muss, kann die Scannereinheit grundsätzlich deaktiviert sein bzw. sich in einem Ruhezustand befinden und nur dann für einen Scanvorgang aktiviert werden, falls dies tatsächlich erforderlich ist.

Alternativ oder zusätzlich kann auch eine Zeitdauer vorbestimmt werden, für welche die aktivierte Scannereinheit aktiviert bleiben soll. Dies können beispielsweise ca. 5 bis 10 Sekunden sein, was üblicherweise ausreichen sollte, damit ein Benutzer ein Objekt, welches er ohnehin bereits in der Hand hält, vor die Scannereinheit halten und scannen lassen kann. Hierdurch kann auch sichergestellt werden, dass eine aktivierte Scannereinheit auch wieder deaktiviert wird, falls der Benutzer das Scannen der Kodierung des Objekts unterlässt. In jedem Fall kann durch die Deaktivierung der Scannereinheit diese geschont sowie der Verbrauch elektrischer Energie zum Betrieb der Scannereinheit möglichst gering gehalten werden.

Gemäß einem weiteren Aspekt der Erfindung ist die Haushaltslagervorrichtung ausgebildet, vorzugsweise einem Benutzer, eine Information des bestimmten Objekts zur Verfügung zu stellen. Somit kann ein Objekt wie zuvor beschrieben bestimmt und z.B. eine Bezeichnung eines Objekts wie z.B. "Orangensaft" zur Verfügung gestellt werden. Diese Information kann einem Benutzer z.B. angezeigt werden, um ihn über das gelagerte Objekt der Haushaltslagervorrichtung z.B. mittels eines Smartphones zu informieren. Diese Informationen können dabei vorzugsweise einem Benutzer, wie zuvor beschrieben, zur Verfügung gestellt werden aber auch z.B. einem Haushaltsgerät wie z.B. einem Kochfeld, um den Benutzer bei der Zubereitung von Speisen zu unterstützen, indem z.B. die aktuell verwendeten Lebensmittel mit Informationen wie z.B. Gewicht, Marke, Zubereitungsempfehlungen etc. angezeigt werden, welche jeweils in der Kodierung enthalten bzw. mittels der eindeutigen Bestimmung des Objekts erhalten werden können. Auch können diese Informationen einer zentralen Steuereinheit eines Haushalts und dergleichen zur Verfügung gestellt werden.

Gemäß einem weiteren Aspekt der Erfindung ist die Haushaltslagervorrichtung ausgebildet, vorzugsweise einem Benutzer, eine Information aller bestimmten Objekte zur Verfügung zu stellen, welche im Nutzraum gelagert sind. Hierdurch kann der Benutzer bei der Bevorratung, beim Einkauf sowie bei der Planung der Zubereitung von Speisen unterstützt werden. Insbesondere kann die Anzahl der identischen Objekte hierzu gezählt und angezeigt werden. Diese Informationen können dabei vorzugsweise einem Benutzer, wie zuvor beschrieben, zur Verfügung gestellt werden aber auch z.B. einem Haushaltsgerät wie z.B. einem Kochfeld, um dort den Bestand der Haushaltslagervorrichtung bei der Planung bzw. bei der Zubereitung von Speisen berücksichtigen zu können. Auch können diese Informationen einer zentralen Steuereinheit eines Haushalts und dergleichen zur Verfügung gestellt werden.

Die vorliegende Erfindung betrifft auch ein Objekterkennungssystem für eine Haushaltslagervorrichtung wie zuvor beschrieben mit wenigstens einer Bilderfassungseinheit, welche ausgebildet ist, einen Nutzraum der Haushaltslagervorrichtung zumindest abschnittsweise optisch zu erfassen, und mit wenigstens einer Scannereinheit, welche ausgebildet und angeordnet ist, eine Kodierung eines Objekts zu erfassen, wobei das Objekterkennungssystem ferner ausgebildet ist, das Objekt wenigstens basierend auf der erfassten Kodierung zu bestimmen. Auf diese Art und Weise kann ein Objekterkennungssystem zur Verfügung gestellt werden, um eine erfindungsgemäße Haushaltslagervorrichtung umsetzen und deren Eigenschaften und Vorteile nutzen zu können. Insbesondere kann hierdurch die Möglichkeit geschaffen werden, eine vorhandene und bekannte Haushaltslagervorrichtung mit einem erfindungsgemäßen Objekterkennungssystem auszurüsten und so zu einer erfindungsgemäßen Haushaltslagervorrichtung zu machen.

Die zuvor beschriebenen Aspekte der erfindungsgemäßen Haushaltslagervorrichtung, welche die Informationen über den Inhalt der Haushaltslagervorrichtung betreffen, können dabei auch seitens des Objekterkennungssystems umgesetzt werden. Insbesondere können mehrere bestimmte Objekte und insbesondere alle bestimmten Objekte, welche von der Haushaltsvorratsvorrichtung aktuell aufgenommen werden sowie ggfs. deren Historie, auch von dem Objekterkennungssystem gespeichert und, insbesondere einem Benutzer, zur Verfügung gestellt werden, wie zuvor hinsichtlich der erfindungsgemäßen Haushaltsvorratsvorrichtung beschrieben.

Mehrere Ausführungsbeispiele der Erfindung sind in den Zeichnungen rein schematisch dargestellt und werden nachfolgend näher beschrieben. Es zeigt
- Figur 1: eine perspektivische schematische Darstellung eines Kühlschranks gemäß einem ersten Ausführungsbeispiel einer erfindungsgemäßen Haushaltslagervorrichtung;
- Figur 2: eine perspektivische schematische Darstellung eines Kühlschranks gemäß einem zweiten Ausführungsbeispiel einer erfindungsgemäßen Haushaltslagervorrichtung;
- Figur 3: eine perspektivische schematische Darstellung eines Kühlschranks gemäß einem dritten Ausführungsbeispiel einer erfindungsgemäßen Haushaltslagervorrichtung; und
- Figur 4: eine perspektivische schematische Darstellung gemäß einem vierten Ausführungsbeispiel eines Ablaufs, der mit einer erfindungsgemäßen Haushaltslagervorrichtung ermöglicht wird.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

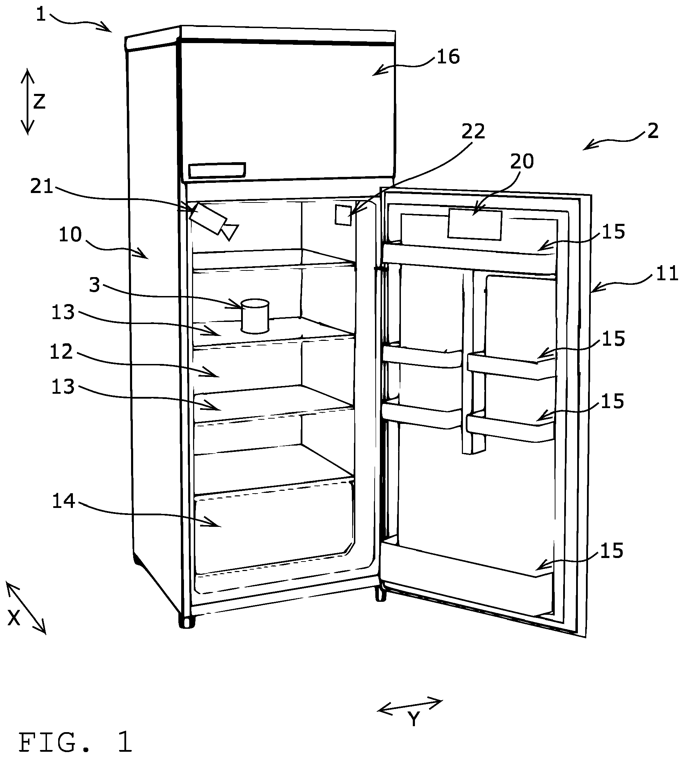

Figur 1 zeigt eine erfindungsgemäße Haushaltslagervorrichtung 1 gemäß einem ersten Ausführungsbeispiel, welche beispielhaft als Kühlgerät 1 bzw. als Haushaltskühlgerät 1 in Form eines Kühlschranks 1 ausgeführt ist. Die erfindungsgemäße Haushaltslagervorrichtung 1 kann jedoch auch ein offenes oder ein mit wenigstens einer Tür schließbares Lagerregal, Vorratsregal und dergleichen sowie ein offener oder mit Türen schließbarer Lagerschrank, Vorratsschrank und dergleichen sein, welcher in einem Lagerraum, in einem Vorratsraum, in einer Speisekammer, in einem Vorratskeller und dergleichen zur Lagerung von Lebensmittels und bzw. oder Haushaltsmitteln verwendet werden kann. Die erfindungsgemäße Haushaltslagervorrichtung 1 kann ebenso ein offener oder ein mit wenigstens einer Tür verschließbarer Küchenschrank sowie eine Küchenzeile bzw. ein Element einer Küchenzeile sein, welches zur Lagerung von Lebensmittels und bzw. oder Haushaltsmitteln verwendet werden kann. Die erfindungsgemäße Haushaltslagervorrichtung 1 kann ferner ein mit wenigstens einer Tür verschließbarer Weinklimaschrank bzw. ein mit wenigstens einer Tür verschließbarer Weintemperierschrank sein. Als Haushaltskühlgerät 1 kann die erfindungsgemäße Haushaltslagervorrichtung 1 auch ein sonstiges Kühlgerät wie z.B. eine Kühltruhe oder auch ein Gefriergerät wie z.B. ein Gefrierschrank oder eine Gefriertruhe sein. In jedem Fall kann eine erfindungsgemäße Haushaltslagervorrichtung 1 eine jegliche Lagervorrichtung für Lebensmittel und bzw. oder Haushaltswaren sein, welche in einem privaten Haushalten sowie z.B. in der Gastronomie und in Hotels verwendet werden kann.

Der Kühlschrank 1 weist ein quaderförmiges Gehäuse 10 auf, welches einen Innenraum 12 als Nutzraum 12 umgibt und mittels eines Schließelements 11 in Form einer Tür 11 geöffnet und geschlossen werden kann, um den Innenraum 12 einem Benutzer zugänglich zu machen bzw. um den Innenraum 12 zu verschließen. Innerhalb des Innenraums 12 sind mehrere Böden 13 horizontal angeordnet, um auf sich drauf Lebensmittel und dergleichen aufzunehmen. Im unteren Bereich des Innenraums 12 ist eine Schublade 14 angeordnet, welche in der Tiefe X vom Benutzer hervor- bzw. herausgezogen bzw. in der entgegengesetzten Richtung in den Innenraum 12 eingeschoben werden kann. Auch hier können z.B. Lebensmittel z.B. in Form von Obst, Gemüse und dergleichen aufbewahrt werden. Ferner weist die Tür 11 an ihrer dem Innenraum 12 zugewandten Innenseite mehrere Türfächer 15 auf, in welche insbesondere Flaschen, Tetrapacks und dergleichen angeordnet werden können. Die Böden 13, die Schublade 14 sowie die Türfächer 15 bilden Lagerungselemente 13, 14, 15 des Kühlschranks 1, welche sich bei geschlossener Tür 11 alle im Nutzraum 12 bzw. im Innenraum 12 des Kühlschranks 1 befinden.

Oberhalb des Innenraums 12 weist der Kühlschrank 1 noch eine Gefriereinheit 16 auf, welche ebenfalls mit einer separaten Tür (nicht bezeichnet) schließbar ist. Dort können gefrorene Lebensmittel aufgenommen werden, was hier jedoch nicht näher betrachtet werden soll.

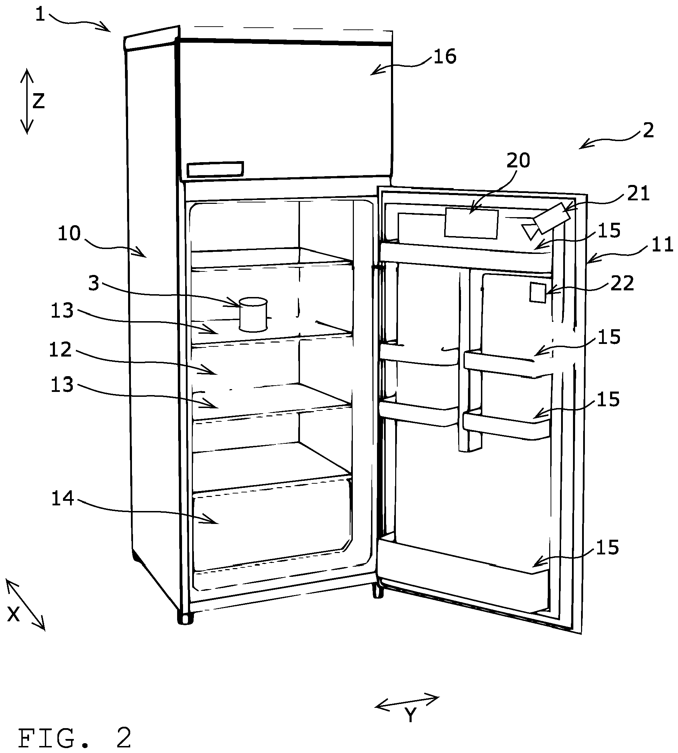

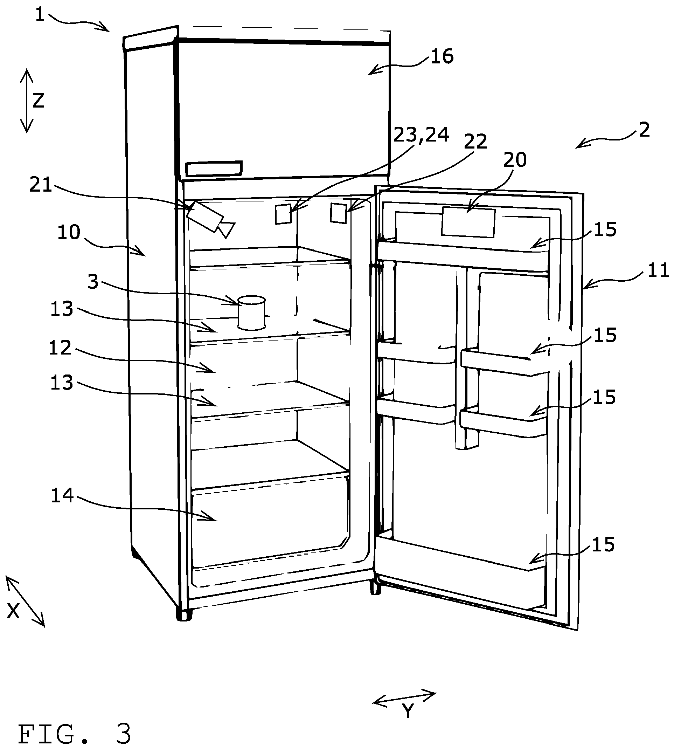

Der Kühlschrank 1 ist mit einem erfindungsgemäßen Objekterkennungssystem 2 ausgerüstet, welches eine Bilderfassungseinheit 21 in Form einer Kamera 21 aufweist, welche signalübertragend mit einer Bildverarbeitungseinheit 20 verbunden ist. Die Kamera 21 ist gemäß dem ersten und dritten Ausführungsbeispiel der Figuren 1 und 3 an einer oberen äußeren Ecke des Nutzraums 12 derart angeordnet und ausgerichtet, so dass die Kamera 21 den Bereich vor dem Nutzraum 12 optisch erfassen kann, wenn die Tür 11 geöffnet ist. Gleichzeitig kann die Kamera 21 die Innenseite der Tür 11 optisch erfassen, wenn die Tür 11 geöffnet ist. Gemäß dem zweiten Ausführungsbeispiel der Figur 2 ist die Kamera 21 an der in der Breite Y gegenüberliegenden oberen Ecke des Nutzraums 12 des Kühlschranks 1 an dessen Innenseite nahe der vorderen Kante angeordnet und von dort zum Nutzraum 12 hin ausgerichtet, wenn die Tür 11 geöffnet ist.

Die Bildverarbeitungseinheit 20 kann alternativ auch in der der Bilderfassungseinheit 21 integriert sein oder in der Cloud liegen. So wird das Bild in die Cloud übertragen und von dort aus im Objekterkennungssystem 2 detektiert. Auch kann alternativ die Bilderfassungseinheit 21 außerhalb des Kühlschranks 1 liegen, z.B. oben auf dem Kühlschrank 1 aufgesetzt.

In jedem Fall kann hierdurch eine optische Erfassung des Bereichs unmittelbar vor dem Nutzraum 12 erfolgen, um wenigstens ein Objekt 3 zu erfassen, wenn dieses von einem Benutzer dem Nutzraum 12 entnommen oder dem Nutzraum 12 zugefügt wird. Das Objekt 3 ist in diesem Fall ein Produkt 3 in Form eines Lebensmittels 3. Das Lebensmittel 3 kann dabei z.B. ein loses Lebensmittel 3 wie z.B. ein Stück Obst oder Gemüse wie z.B. eine Banane sein, aber auch ein verpacktes Lebensmittel wie z.B. ein Joghurtbecher oder ein Lebensmittel wie z.B. Wurstscheiben, welche sich innerhalb einer Frischhaltedose oder dergleichen befinden.

Das Objekterkennungssystem 2 weist auch eine Scannereinheit 22 in Form eines optischen Barcode-Scanners 22 auf, welcher ausgebildet ist, einen Barcode als optoelektronisch lesbare Schrift optisch zu erfassen und auszulesen. Der Barcode-Scanner 22 ist gemäß dem ersten und dritten Ausführungsbeispiel des Kühlschranks 1 der Figuren 1 bzw. 3 an der in der Breite Y gegenüberliegenden oberen Ecke des Nutzraums 12 des Kühlschranks 1 an dessen Innenseite nahe der vorderen Kante angeordnet, so dass gemäß des ersten und dritten Ausführungsbeispiels der Figuren 1 und 3 auch der Barcode-Scanner 22 von der Bilderfassungseinheit 21 optisch erfasst werden kann. Alternativ kann der Barcode-Scanner 22 gemäß dem zweiten Ausführungsbeispiel des Kühlschranks 1 der Figur 2 auch an der vorderen Kante der Innenseite der Tür 11 in der Höhe Z etwa mittig angeordnet sein, was die Zugänglichkeit für den Benutzer vereinfachen kann.

Die Bilderfassungseinheit 21 und Scannereinheit / Barcode-Scanner 22 können in einem Gerät sein und in der Position 21 (in der Ecke) befestigt werden.

Die Bilderfassungseinheit 21 schaltet automatisch auf die Scannerfunktion um, sobald das Bild verpixelt, unscharf wird bzw. sehr nah an die Bilderfassung 3 gehalten wird (mögliche Aktion zur Aktivierung des Barcodescanners).

Wird nun z.B. ein Lebensmittel 3 von einem Benutzer in der Hand gehalten und z.B. auf einen Boden 13 im Innenraum 12 des Kühlschranks 1 gestellt, so wird das Lebensmittel 3 während dieser Bewegung optisch von der Kamera 21 erfasst und die erfasste Bildfolge von der Bildverarbeitungseinheit 20 ausgewertet, um das Lebensmittel 3 optisch zu bestimmen. Kann diese Bestimmung basierend auf den optisch erfassten Bilddaten der Kamera 21 erfolgreich durchgeführt werden, kann das bestimmte Lebensmittel 3 in einer entsprechenden Inventarliste des Kühlschranks 1 vermerkt und diese Information ggfs. dem Benutzer zur Verfügung gestellt werden.

Ist eine derartige Bestimmung des Lebensmittels 3 basierend auf den optisch erfassten Bilddaten der Kamera 21 gar nicht bzw. mit nicht ausreichender Genauigkeit möglich, z.B. weil der Benutzer das Lebensmittel 3 zu sehr mit der Hand verdeckt und bzw. oder die erkannten Informationen nicht eindeutig sind, so kann der Kühlschrank 1 beispielsweise den Benutzer mittels einer akustischen Meldung hierauf hinweisen. Dies kann auch als Sprachausgabe erfolgen. Zusätzlich oder alternativ kann auch die Beleuchtung des Kühlschranks 1 kurzzeitig ausgeschaltet werden. Hierdurch kann die Aufmerksamkeit des Benutzers erlangt werden, was umso verlässlicher erfolgen kann, desto unterschiedlicher die Hinweise sind, z.B. ein akustischer Hinweis zusammen mit einem optischen Hinweis, ggfs. auch über einen gewissen Zeitraum.

Gleichzeitig kann der Kühlschrank 1 den Barcode-Scanner 22 aktivieren. Nun kann der Benutzer das Lebensmittel 3 vor den Barcode-Scanner 22 halten und die Kodierung des Lebensmittels 3 in Form eines Barcodes erfassen lassen. Aufgrund der Auswertung bzw. des Auslesens des Barcodes des Lebensmittels 3 kann dieses nun eindeutig bestimmt werden. Entsprechend genau kann die Inventarliste des Kühlschranks 1 geführt werden, was die Akzeptanz des Benutzers für diese Funktion erhöhen bzw. überhaupt erst erreichen kann.

Alternativ zu einer selbsttätigen Aktivierung des Barcode-Scanners 22 kann der Barcode-Scanner 22 auch dadurch aktiviert werden, indem das Lebensmittel 3 von dem Benutzer vor den Barcode-Scanner 22 gehalten wird. Da diese Position beim üblichen Be- und Entladen des Kühlschranks 1 von dem Lebensmittel 3 nicht eingenommen wird, könnte das Lebensmittel 3 von der Bildverarbeitungseinheit 20 basierend auf den optisch erfassten Bilddaten der Kamera 21 dort erkannt und hieraus geschlussfolgert werden, dass der Benutzer durch diese Positionierung des Lebensmittels 3 eine Anweisung zur Aktivierung des Barcode-Scanners 22 erteilen möchte. Dies könnte ebenfalls zur Aktivierung des Barcode-Scanners 22 führen.

Vergleichbar könnte basierend auf den optisch erfassten Bilddaten der Kamera 21 auch seitens der Bildverarbeitungseinheit 20 erkannt werden, dass der Barcode-Scanner 22 von dem Lebensmittel 3 verdeckt wird. Auch könnte von der Bildverarbeitungseinheit 20 eine Bewegung des von dem Benutzer in der Hand gehaltenen Lebensmittels 3 wie z.B. eine Kreisbewegung basierend auf den optisch erfassten Bilddaten der Kamera 21 erkannt und ebenfalls als Anweisung zur Aktivierung des Barcode-Scanners 22 verstanden werden. Ferner könnte das Lebensmittel 3 von dem Benutzer derart nahe vor die Kamera 21 gehalten werden, dass lediglich ein Ausschnitt des Lebensmittels 3 und bzw. oder ein unscharfes Bild des Lebensmittels 3 von der Kamera 21 erfasst werden kann. Da auch dies von der Bildverarbeitungseinheit 20 erkannt werden kann, könnte auch hierdurch eine Anweisung des Benutzers zur Aktivierung des Barcode-Scanners 22 getätigt werden.

Darüber hinaus besteht zusätzlich oder alternativ auch die Möglichkeit, eine Näherungssensoreinheit 23 zu verwenden, um eine Annäherung des Lebensmittels 3 an den Barcode-Scanner 22 zu erfassen und in Reaktion hierauf den Barcode-Scanner 22 zu aktivieren. Die Näherungssensoreinheit 23 kann hierzu an der Innenseite der Rückwand des Nutzraums 12 angeordnet und nach vorne zu Öffnung des Nutzraums 12 ausgerichtet sein, um den Bereich unmittelbar vor der Näherungssensoreinheit 23 zu erfassen, siehe Figur 3.

Alternativ oder zusätzlich kann auch eine Lichtschrankeneinheit 24 verwendet werden, um den Bereich unmittelbar vor der Näherungssensoreinheit 23 mit einer Lichtschranke zu versehen. Das Durchbrechen der Lichtschranke kann dann ebenfalls dazu verwendet werden, in Reaktion hierauf den Barcode-Scanner 22 zu aktivieren. Die Lichtschrankeneinheit 24 kann vergleichbar der Näherungssensoreinheit 23 angeordnet werden, so dass der Bereich unmittelbar vor der Näherungssensoreinheit 23 erfasst werden kann, siehe Figur 3.

In jedem Fall kann durch die Verwendung des Barcode-Scanners 22 die Genauigkeit der Bestimmung von Lebensmitteln 3 erhöht werden, was den Nutzen für den Benutzer erhöhen und insbesondere die Akzeptanz eines derartigen erfindungsgemäßen Kühlschranks 1 bzw. eines derartigen erfindungsgemäßen Objekterkennungssystems 2 verbessern kann. Die Erkennungsrate der Lebensmittel 3 kann so erhöht werden, ohne dass ein Benutzer sein Verhalten z.B. hinsichtlich der Geschwindigkeit, mit der ein Lebensmittel 3 aus dem Nutzraum 12 des Kühlschranks 1 entnommen wird, ändern muss. Auch kann die erste Kamera 21 sowie die im Nutzraum 12 vorhandene Beleuchtung (nicht dargestellt) des Kühlschranks 1 unverändert verwendet werden.

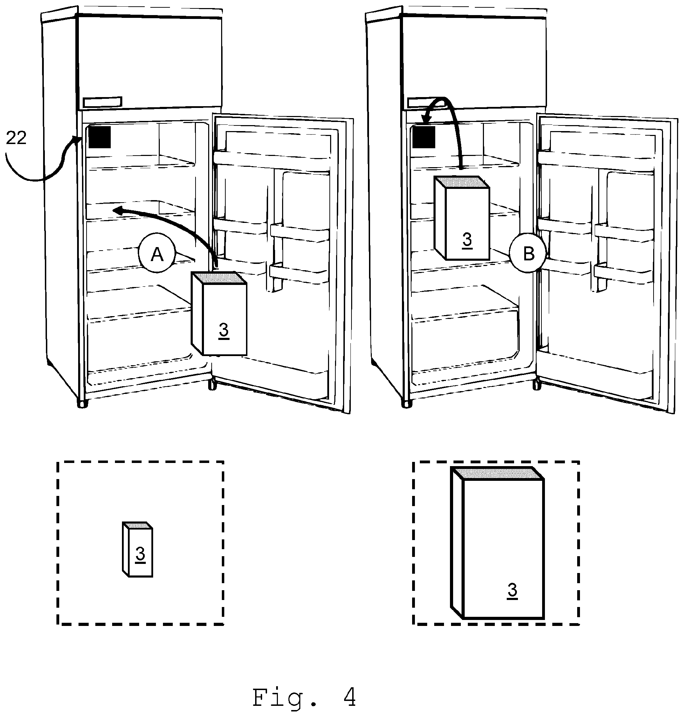

In Figur 4 ist ein Ablauf gemäß einer Ausführungsform gezeigt. Beim Einlagern eines Produkts 3 wird in dem links gezeigten Schritt A das Produkt 3 nicht erkannt. Dies kann beispielsweise daran liegen, dass das Produkt einen zu geringen Anteil des Kamerabilds (unten gestrichelt dargestellt) einnahm bzw. zu klein aufgenommen oder zu schnell bewegt wurde, um eine sichere Erkennung zu ermöglichen. Die fehlgeschlagene Erkennung wird dem Benutzer auf eine der vorstehend erläuterten Arten angezeigt bzw. gemeldet.

Daraufhin kann der Benutzer im rechts gezeigten Schritt B das Produkt 3 in Richtung der Kamera (nicht gezeigt) bewegen. Wenn eine Annäherung des Produkts 3 registriert wird, etwa durch definierte Winkel im Bild oder einen bestimmten Wert der Bedeckung des Kamerabilds (unten gestrichelt dargestellt), wird das Zusatzsystem, wie hier gezeigt der Barcodescanner 22, automatisch aktiviert, um das Produkt 3 zu erkennen. Der Benutzer muss das Produkt 3 daher nicht aus der Hand nehmen, sondern kann in einer einfachen weiteren Bewegung eine Erkennung des Produkts 3 bewirken, selbst wenn die initiale Erkennung fehlschlägt.

### Bezugszeichenliste (Bestandteil der Beschreibung)

- X: Längsrichtung; Tiefe; Länge
- Y: Querrichtung; Breite
- Z: vertikale Richtung; Höhe

- 1: Haushaltslagervorrichtung; Kühlgerät; Haushaltskühlgerät; Kühlschrank
- 10: Gehäuse
- 11: Schließelement; Tür
- 12: Nutzraum; Innenraum
- 13: Lagerungselemente; Böden
- 14: Lagerungselement; Schublade
- 15: Lagerungselemente; Türfächer
- 16: Gefriereinheit

- 2: Objekterkennungssystem
- 20: Bildverarbeitungseinheit
- 21: Bilderfassungseinheit; Kamera
- 22: Scannereinheit; Barcode-Scanner
- 23: Näherungssensoreinheit
- 24: Lichtschrankeneinheit

- 3: Objekt; Produkt; Lebensmittel; Haushaltsmittel

## Patentansprüche

1. Haushaltslagervorrichtung (1)
mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und
mit wenigstens einer Bilderfassungseinheit (21), welche ausgebildet und angeordnet ist, wenigstens ein Objekt (3) zumindest abschnittsweise optisch zu erfassen, wenn das Objekt (3) dem Lagerungselement (13, 14, 15) hinzugefügt oder dem Lagerungselement (13, 14, 15) entnommen wird,
wobei die Haushaltslagervorrichtung (1) ausgebildet ist, das Objekt (3) wenigstens basierend auf den optisch erfassten Bilddaten der Bilderfassungseinheit (21) zu bestimmen,
**gekennzeichnet durch**
wenigstens eine Scannereinheit (22), welche ausgebildet und angeordnet ist, eine Kodierung des Objekts (3) zu erfassen,
wobei die Haushaltslagervorrichtung (1) ferner ausgebildet ist, das Objekt (3) wenigstens basierend auf der erfassten Kodierung zu bestimmen.

2. Haushaltslagervorrichtung (1) nach Anspruch 1, **dadurch gekennzeichnet, dass**
die Scannereinheit (22) ausgebildet ist, eine Barcode-Kodierung des Objekts (3), eine QR-Kodierung des Objekts (3) und/oder eine RFID-Kodierung des Objekts (3) zu erfassen.

3. Haushaltslagervorrichtung (1) nach Anspruch 1 oder 2, **dadurch gekennzeichnet, dass**
die Haushaltslagervorrichtung (1) ausgebildet ist, einen Hinweis an einen Benutzer, vorzugsweise optisch und/oder akustisch, auszugeben, falls das Objekt (3) basierend auf den optisch erfassten Bilddaten der Bilderfassungseinheit (21) bestimmt und/oder nicht bestimmt werden konnte.

4. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu aktivieren, falls das Objekt (3) basierend auf den optisch erfassten Bilddaten der Bilderfassungseinheit (21) nicht bestimmt werden konnte.

5. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu aktivieren, falls das Objekt (3) basierend auf den optisch erfassten Bilddaten der Bilderfassungseinheit (21) an einer vorbestimmten Position relativ zur Haushaltslagervorrichtung (1) erkannt wurde.

6. Haushaltslagervorrichtung (1) nach einem der vorangehenden Ansprüche, **dadurch gekennzeichnet, dass**
die Haushaltslagervorrichtung (1) wenigstens ein vorbestimmtes optisches Muster aufweist, welches vorzugsweise innerhalb des Nutzraums (12) angeordnet ist,
wobei die Haushaltslagervorrichtung (1) ausgebildet ist, die Scannereinheit (22) zu aktivieren, falls basierend auf den optisch erfassten Bilddaten der Bilderfassungseinheit (21) eine zumindest abschnittsweise Verdeckung des vorbestimmten optischen Musters erkannt wurde.

7. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu aktivieren, falls basierend auf den optisch erfassten Bilddaten der Bilderfassungseinheit (21) eine vorbestimmte Bewegung des Objekts (3), vorzugsweise zur Bilderfassungseinheit (21) hin, erkannt wurde.

8. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu aktivieren, falls basierend auf den optisch erfassten Bilddaten der Bilderfassungseinheit (21) lediglich ein Ausschnitt des Objekts (3) erkannt wurde.

9. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu aktivieren, falls das Objekt (3) basierend auf den optisch erfassten Bilddaten der Bilderfassungseinheit (21) als unscharf erkannt wurde.

10. Haushaltslagervorrichtung (1) nach einem der vorangehenden Ansprüche, **dadurch gekennzeichnet, dass**
die Haushaltslagervorrichtung (1) eine Näherungssensoreinheit (23) aufweist, welche ausgebildet und angeordnet ist, eine Annäherung des Objekts (3) an die Scannereinheit (22) zu erfassen,
wobei die Haushaltslagervorrichtung (1) ausgebildet ist, die Scannereinheit (22) zu aktivieren, falls eine Annäherung des Objekts (3) an die Scannereinheit (22) erkannt wurde.

11. Haushaltslagervorrichtung (1) nach einem der vorangehenden Ansprüche, **dadurch gekennzeichnet, dass**
die Haushaltslagervorrichtung (1) eine Lichtschrankeneinheit (24) aufweist, welche ausgebildet und angeordnet ist, bei Annäherung des Objekts (3) an die Scannereinheit (22) unterbrochen zu werden,
wobei die Haushaltslagervorrichtung (1) ausgebildet ist, die Scannereinheit (22) zu aktivieren, falls eine Unterbrechung der Lichtschranke der Lichtschrankeneinheit (23) erkannt wurde.

12. Haushaltslagervorrichtung (1) nach einem der vorangehenden Ansprüche, **dadurch gekennzeichnet, dass**
die Haushaltslagervorrichtung (1) ausgebildet ist, die Scannereinheit (22) zu deaktivieren, falls die Kodierung des Objekts (3) erfolgreich erkannt wurde und/oder nach Ablauf einer vorbestimmten Zeitdauer.

13. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information des bestimmten Objekts (3) zur Verfügung zu stellen.

14. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information aller bestimmten Objekte (3) zur Verfügung zu stellen, welche im Nutzraum (12) gelagert sind.

15. Objekterkennungssystem (2) für eine Haushaltslagervorrichtung (1) nach einem der vorangehenden Ansprüche
mit wenigstens einer Bilderfassungseinheit (21), welche ausgebildet ist, einen Nutzraum (12) der Haushaltslagervorrichtung (1) zumindest abschnittsweise optisch zu erfassen, und
mit wenigstens eine Scannereinheit (22), welche ausgebildet und angeordnet ist, eine Kodierung eines Objekts (3) zu erfassen,
wobei das Objekterkennungssystem (2) ferner ausgebildet ist, das Objekt (3) wenigstens basierend auf der erfassten Kodierung zu bestimmen.
